# EUROPEAN PATENT APPLICATION

(11) **EP 4 343 030 A2**
(43) Date of publication of application: **27.03.2024**
(21) Application number: 23182949.0
(22) Date of filing: 03.07.2023
(51) Int. Cl.: C25B 1/04, C25B 9/00, C25B 9/23, C25B 9/77, C25B 11/032, C25B 15/08

(54) **WATER ELECTROLYZER**

(30) Priority: 20.09.2022 JP 2022149017
(71) Applicant: SCREEN Holdings Co., Ltd., Kyoto-shi, Kyoto 602-8585 (JP)
(72) Inventor: TAKAGI, Yoshinori, Kyoto, 602-858 (JP); KAWAKAMI, Takuto, Kyoto, 602-858 (JP); MORI, Takayuki, Kyoto, 602-858 (JP)
(74) Representative: Goddar, Heinz J.

(57) **Abstract**

The present water electrolyzer has a stack structure with a cell and a separator stacked alternately. The separator includes a metal plate and a flow path member. The metal plate has a distribution hole. The flow path member is located between a base layer of the cell and the metal plate in a stacking direction. The flow path member surrounds the distribution hole in a ring-like shape when viewed in the stacking direction. The flow path member includes a flow path through which a gas diffusion layer of the cell and the distribution hole communicate with each other. As a result, it becomes possible to cause gas or water to flow between the gas diffusion layer and the distribution hole through the flow path formed at the flow path member. This eliminates a need to form a flow path using a combination of a plurality of metal plates, thereby achieving reduction in the number of the metal plates to be used as the separator.

## Description

### BACKGROUND OF THE INVENTION

### Field of the Invention

The present invention relates to a water electrolyzer.

### Description of the Background Art

A water electrolyzer conventionally known produces hydrogen (H₂) through electrolysis of water (H₂O). The water electrolyzer has a stack structure with a cell and a separator stacked alternately. Each cell includes an electrolyte membrane and catalyst layers formed on both surfaces of the electrolyte membrane. During implementation of water electrolysis, a voltage is applied between an anode-side catalyst layer and a cathode-side catalyst layer and water is supplied to the anode-side catalyst layer. This causes electrochemical reactions as follows at the anode-side catalyst layer and the cathode-side catalyst layer. As a result, hydrogen is output from the cathode-side catalyst layer.
(anode side)

   2H₂O → 4H⁺ + O₂ + 4e⁻
(cathode side)

   2H⁺ + 2e⁻ → H₂

Conventional solid polymer water electrolysis is described in Japanese Patent Application Laid-Open No. 2022-023996, for example.

In the water electrolyzer, it is necessary to form flow paths for water, oxygen, and hydrogen supplied or output during the above-described electrochemical reactions and to provide reliable sealing between these flow paths. To meet these conditions, a separator in the conventional water electrolyzer is composed of two metal plates. However, locating two metal plates between one cell and another cell increases cost involved in the separator.

### SUMMARY OF THE INVENTION

The present invention has been made in view of the foregoing circumstances, and is intended to provide a technique achieving reduction in the number of metal plates to be used as a separator in a water electrolyzer.

To solve the foregoing problem, a first aspect of the present invention is intended for a water electrolyzer comprising a plurality of cells and a plurality of separators, and having a stack structure with the cells and the separators stacked alternately. Each of the cells includes: a base layer including an electrolyte membrane; a catalyst layer layered on a surface of the electrolyte membrane; and a gas diffusion layer layered on a surface of the catalyst layer. Each of the separators includes: a metal plate with a distribution hole; and a ring-like flow path member located between the base layer and the metal plate in a stacking direction and surrounding the distribution hole when viewed in the stacking direction. The flow path member includes a flow path through which the gas diffusion layer and the distribution hole communicate with each other.

According to a second aspect of the present invention, in the water electrolyzer according to the first aspect, each of the cells includes: a cathode catalyst layer that is the catalyst layer layered on the electrolyte membrane on one side; and a cathode gas diffusion layer that is the gas diffusion layer layered on the cathode catalyst layer on the one side, the metal plate includes a hydrogen distribution hole that is the distribution hole for distributing hydrogen output from the cathode gas diffusion layer, each of the separators includes a cathode flow path member that is the flow path member located between a cathode-side surface of the base layer and the metal plate in the stacking direction and surrounding the hydrogen distribution hole when viewed in the stacking direction, and the cathode flow path member includes a hydrogen flow path that is the flow path through which the cathode gas diffusion layer and the hydrogen distribution hole communicate with each other.

According to a third aspect of the present invention, in the water electrolyzer according to the first or second aspect, each of the cells includes: an anode catalyst layer that is the catalyst layer layered on the electrolyte membrane on the other side; and an anode gas diffusion layer that is the gas diffusion layer layered on the anode catalyst layer on the other side, the metal plate includes: a water distribution hole that is the distribution hole for distributing water to be supplied to the anode gas diffusion layer; and an oxygen distribution hole that is the distribution hole for distributing oxygen output from the anode gas diffusion layer, each of the separators includes: a first anode flow path member that is the flow path member located between an anode-side surface of the base layer and the metal plate in the stacking direction and surrounding the water distribution hole when viewed in the stacking direction; and a second anode flow path member that is the flow path member located between the anode-side surface of the base layer and the metal plate in the stacking direction and surrounding the oxygen distribution hole when viewed in the stacking direction, the first anode flow path member includes a water flow path that is the flow path through which the anode gas diffusion layer and the water distribution hole communicate with each other, and the second anode flow path member includes an oxygen flow path that is the flow path through which the anode gas diffusion layer and the oxygen distribution hole communicate with each other.

According to a fourth aspect of the present invention, in the water electrolyzer according to any one of the first to third aspects, the flow path member includes: a first surface contacting the metal plate; and a second surface contacting the base layer, and the flow path is a groove formed at the first surface.

According to a fifth aspect of the present invention, in the water electrolyzer according to the fourth aspect, each of the separators further includes a ring-like seal member arranged on a surface of the metal plate on the opposite side to the flow path member and surrounding the distribution hole when viewed in the stacking direction, when viewed in the stacking direction, the flow path member is arranged at a position overlapping the seal member, and the second surface of the flow path member is a flat surface.

According to a sixth aspect of the present invention, in the water electrolyzer according to the fourth or fifth aspect, the groove penetrates the first surface of the flow path member in a direction in which the gas diffusion layer and the distribution hole are connected to each other.

According to a seventh aspect of the present invention, in the water electrolyzer according to the fourth or fifth aspect, the groove is a recess formed at a part of the first surface except both end portions thereof defined in a direction in which the gas diffusion layer and the distribution hole are connected to each other, and the both end portions of the flow path member are in non-contact with the metal plate.

According to the first to seventh aspects of the present invention, it is possible to cause gas or water to flow between the gas diffusion layer and the distribution hole through the flow path formed at the flow path member. This eliminates a need to form a flow path using a combination of a plurality of metal plates, thereby achieving reduction in the number of the metal plates to be used as the separator.

In particular, according to the second aspect of the present invention, it is possible for hydrogen output from the cathode gas diffusion layer to flow into the hydrogen distribution hole through the hydrogen flow path formed at the cathode flow path member.

In particular, according to the third aspect of the present invention, it is possible for water to be supplied from the water distribution hole to flow into the anode gas diffusion layer through the water flow path formed at the first anode flow path member. It is further possible for oxygen output from the anode gas diffusion layer to flow into the oxygen distribution hole through the oxygen flow path formed at the second anode flow path member.

In particular, according to the fifth aspect of the present invention, it is possible to prevent flow of unintentional gas or water into the distribution hole using the seal member. Furthermore, forming the second surface of the flow path member as a flat surface allows the seal member to contact the base layer more tightly.

### BRIEF DESCRIPTION OF THE DRAWINGS

Fig. 1 is a schematic view showing a water electrolyzer;
Fig. 2 is a schematic view showing one cell and separators in a pair arranged on both sides of the cell;
Fig. 3 shows an anode surface of the separator;
Fig. 4 shows a cathode surface of the separator;
Fig. 5 is a sectional view of a stack structure taken at a position A-A in Fig. 4; and
Fig. 6 shows a modification of a cathode flow path member.

### DESCRIPTION OF THE PREFERRED EMBODIMENTS

A preferred embodiment of the present invention will be described below by referring to the drawings.

### <1. Outline of Water Electrolyzer>

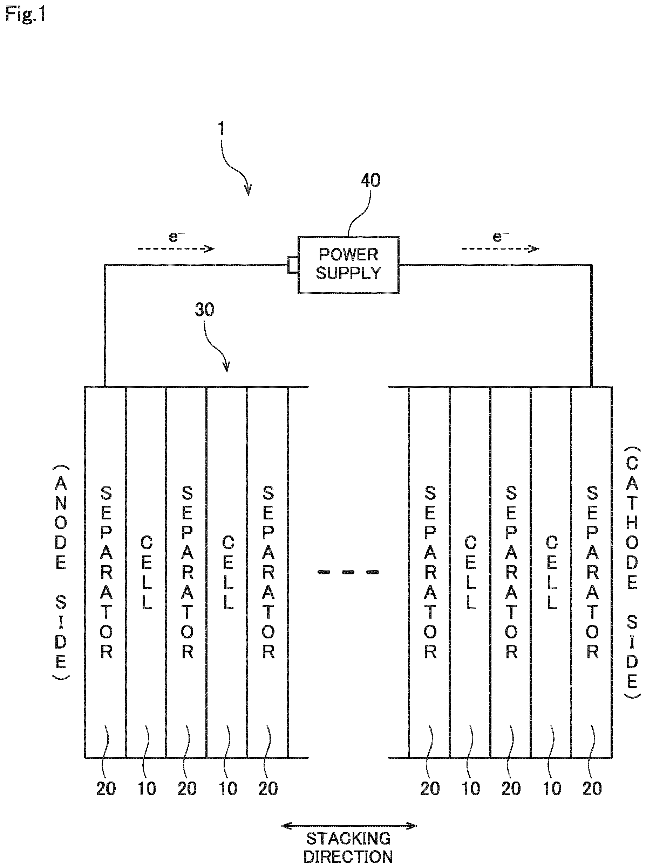

Fig. 1 is a schematic view showing a water electrolyzer 1 according to a preferred embodiment of the present invention. The water electrolyzer 1 is a unit that produces hydrogen through solid polymer water electrolysis. As shown in Fig. 1, the water electrolyzer 1 includes a stack structure 30 with a plurality of cells 10 and a plurality of separators 20, and a power supply 40. The cells 10 and the separators 20 are stacked alternately to form the stack structure 30. In the following, a direction in which the cells 10 and the separators 20 are stacked is called a "stacking direction."

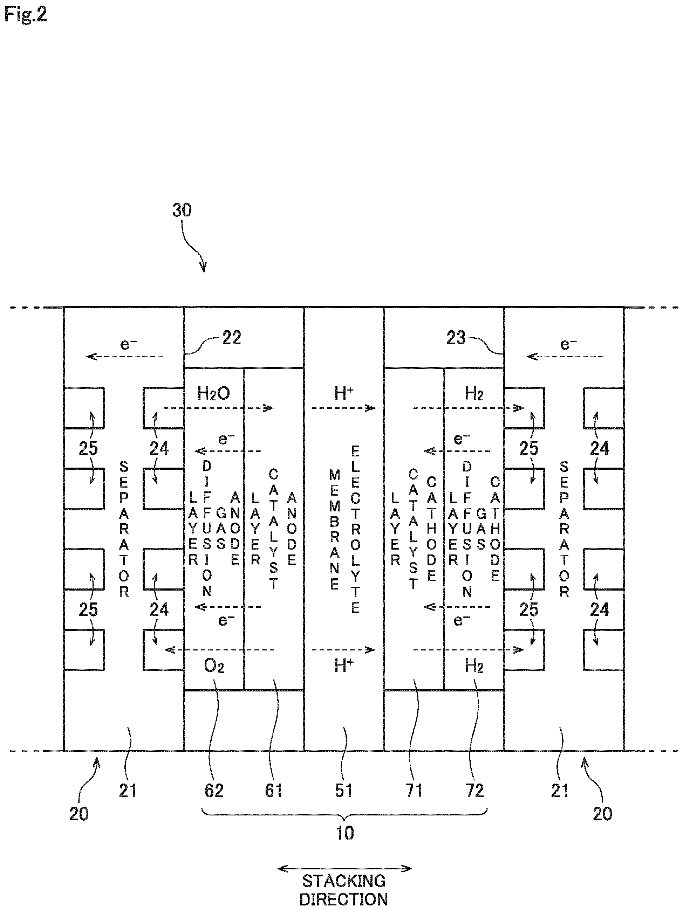

Fig. 2 is a schematic view schematically showing only one cell 10 and separators 20 in a pair located on both sides of this cell 10 in the stack structure 30 of the water electrolyzer 1. As shown in Fig. 2, this cell 10 includes an electrolyte membrane 51, an anode catalyst layer 61, an anode gas diffusion layer 62, a cathode catalyst layer 71, and a cathode gas diffusion layer 72.

A multi-layer structure composed of the electrolyte membrane 51, the anode catalyst layer 61, the anode gas diffusion layer 62, the cathode catalyst layer 71, and the cathode gas diffusion layer 72 is called an membrane-electrode-assembly (MEA). A multi-layer structure composed of the electrolyte membrane 51, the anode catalyst layer 61, and the cathode catalyst layer 71 is called a catalyst-coated membrane (CCM).

The electrolyte membrane 51 is a membrane like a thin plate having ion conductivity (ion-exchange membrane). The electrolyte membrane 51 of the present preferred embodiment is a proton exchange membrane that conducts hydrogen ions (H⁺). A fluorine-based or hydrocarbon-based polymer electrolyte membrane is used as the electrolyte membrane 51. More specifically, a polymer electrolyte membrane containing perfluorocarbon sulfonic acid is used as the electrolyte membrane 51, for example. The electrolyte membrane 51 has a thickness from 5 to 200 µm, for example.

The anode catalyst layer 61 is a catalyst layer that causes electrochemical reaction on an anode side. The anode catalyst layer 61 is layered on an anode-side surface of the electrolyte membrane 51. The anode catalyst layer 61 contains a large number of catalyst particles. The catalyst particles are particles of iridium oxide (IrOx), platinum (Pt), an alloy of iridium (Ir) and ruthenium (Ru), or an alloy of iridium (Ir) and titanium dioxide (TiO₂), for example. During use of the water electrolyzer 1, water (H₂O) is supplied to the anode catalyst layer 61. Then, a voltage is applied between the anode catalyst layer 61 and the cathode catalyst layer 71 from the power supply 40. By doing so, by the actions of the applied voltage and the catalyst particles, the water is electrolyzed into hydrogen ions (H⁺), oxygen (O₂), and electrons (e⁻) in the anode catalyst layer 61.

The anode gas diffusion layer 62 is a layer for supplying water uniformly to the anode catalyst layer 61 and for transmitting oxygen and electrons generated in the anode catalyst layer 61 to the separator 20. The anode gas diffusion layer 62 is layered on an outer surface of the anode catalyst layer 61. Specifically, the anode gas diffusion layer 62 is layered on the surface of the anode catalyst layer 61 on the opposite side to the electrolyte membrane 51. The anode catalyst layer 61 is interposed between the electrolyte membrane 51 and the anode gas diffusion layer 62. The anode gas diffusion layer 62 has electrical conductivity and is made of a porous material. As an example, carbon paper is used as the anode gas diffusion layer 62.

The cathode catalyst layer 71 is a catalyst layer that causes electrochemical reaction on a cathode side. The cathode catalyst layer 71 is formed on a cathode-side surface of the electrolyte membrane 51. Specifically, the cathode catalyst layer 71 is layered on the surface of the electrolyte membrane 51 on the opposite side to the anode catalyst layer 61. The cathode catalyst layer 71 contains a large number of carbon particles on which catalyst particles are supported. The catalyst particles are particles of platinum, for example. Alternatively, the catalyst particles may be prepared by mixing particles of a tiny amount of ruthenium or cobalt into particles of platinum. During use of the water electrolyzer 1, hydrogen ions (H⁺) and electrons (e⁻) are supplied to the cathode catalyst layer 71. Then, a voltage is applied between the anode catalyst layer 61 and the cathode catalyst layer 71 from the power supply 40. By doing so, by the actions of the applied voltage and the catalyst particles, a reduction reaction is caused in the cathode catalyst layer 71 to generate hydrogen gas (H₂) from the hydrogen ions and the electrons.

The cathode gas diffusion layer 72 is a layer for transmitting electrons from the separator 20 to the cathode catalyst layer 71 and for transmitting hydrogen generated in the cathode catalyst layer 71 to the separator 20. The cathode gas diffusion layer 72 is layered on an outer surface of the cathode catalyst layer 71. Specifically, the cathode gas diffusion layer 72 is layered on the surface of the cathode catalyst layer 71 on the opposite side to the electrolyte membrane 51. The cathode catalyst layer 71 is interposed between the electrolyte membrane 51 and the cathode gas diffusion layer 72. The cathode gas diffusion layer 72 has electrical conductivity and is made of a porous material. As an example, carbon paper is used as the cathode gas diffusion layer 72.

The separator 20 is a layer that moves electrons between cells 10 next to the separator 20 and forms pathways for water, oxygen, and hydrogen. The separator 20 is interposed between the anode gas diffusion layer 62 and the cathode gas diffusion layer 72 of the cells 10 next to the separator 20. The separator 20 has electrical conductivity and includes a metal plate 21 without permeability to gas and liquid. The metal plate 21 has an anode surface 22 contacting the anode gas diffusion layer 62, and a cathode surface 23 contacting the cathode gas diffusion layer 72.

The metal plate 21 includes a plurality of anode grooves 24 formed at the anode surface 22. Water passes through these anode grooves 24 of the separator 20 and is then supplied to the anode gas diffusion layer 62. Furthermore, oxygen generated in the anode catalyst layer 61 passes through the anode gas diffusion layer 62 and through the anode grooves 24 of the separator 20, and is then output to the outside.

The metal plate 21 includes a plurality of cathode grooves 25 formed at the cathode surface 23. Hydrogen generated in the cathode catalyst layer 71 passes through the cathode gas diffusion layer 72 and through the cathode grooves 25 of the separator 20, and is then output to the outside.

The power supply 40 is a unit that applies a voltage to the stack structure 30 described above. As shown in Fig. 1, the power supply 40 has a positive terminal electrically connected to the separator 20 located at an extreme end on the anode side of the stack structure 30. The power supply 40 has a negative terminal electrically connected to the separator 20 located at an extreme end on the cathode side of the stack structure 30. The power supply 40 applies a voltage necessary for electrolysis of water to the stack structure 30.

During use of the water electrolyzer 1, water is supplied from the anode grooves 24 of the separator 20 to the anode catalyst layer 61 through the anode gas diffusion layer 62. Then, by the actions of a voltage applied from the power supply 40 and the catalyst particles in the anode catalyst layer 61, the water is decomposed into hydrogen ions, oxygen, and electrons. The hydrogen ions propagate through the electrolyte membrane 51 into the cathode catalyst layer 71. The oxygen passes through the anode gas diffusion layer 62 and the anode grooves 24 of the separator 20 and is then output to the outside. The electrons pass through the anode gas diffusion layer 62 and the separator 20 and then flow into an adjacent cell 10. In the adjacent cell 10, these electrons pass through the cathode gas diffusion layer 72 to reach the cathode catalyst layer 71. Then, in the cathode catalyst layer 71, the hydrogen ions and the electrons are combined with each other to generate hydrogen. The generated hydrogen passes through the cathode gas diffusion layer 72 and the cathode grooves 25 of the separator 20 and is then output to the outside. In this way, hydrogen is produced.

### <2. Stack Structure of Water Electrolyzer>

The foregoing stack structure 30 of the water electrolyzer 1 will be described next in more detail.

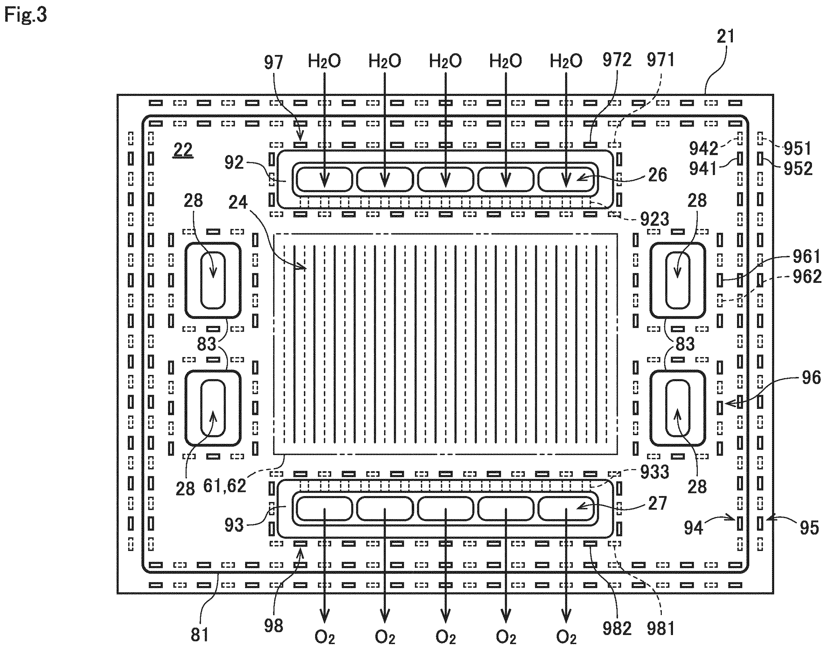

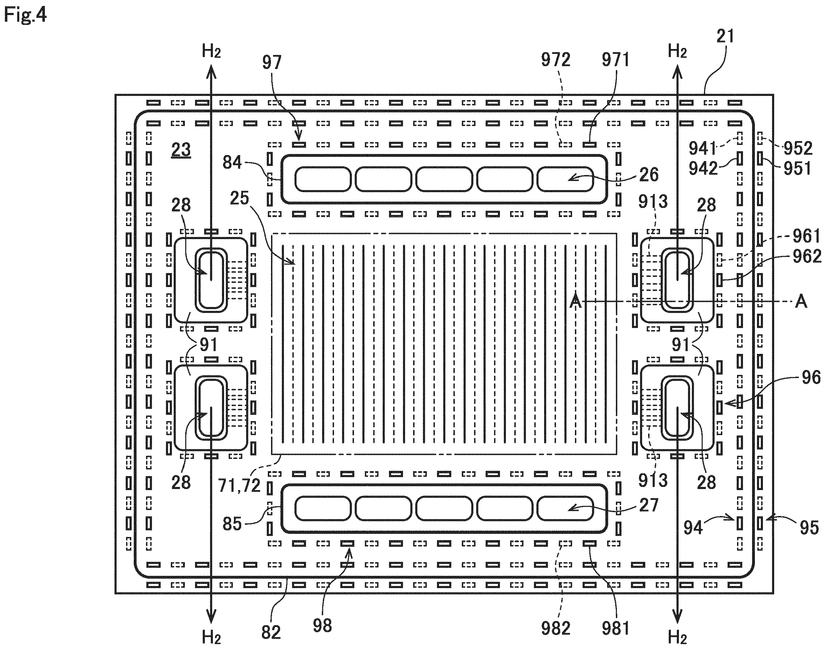

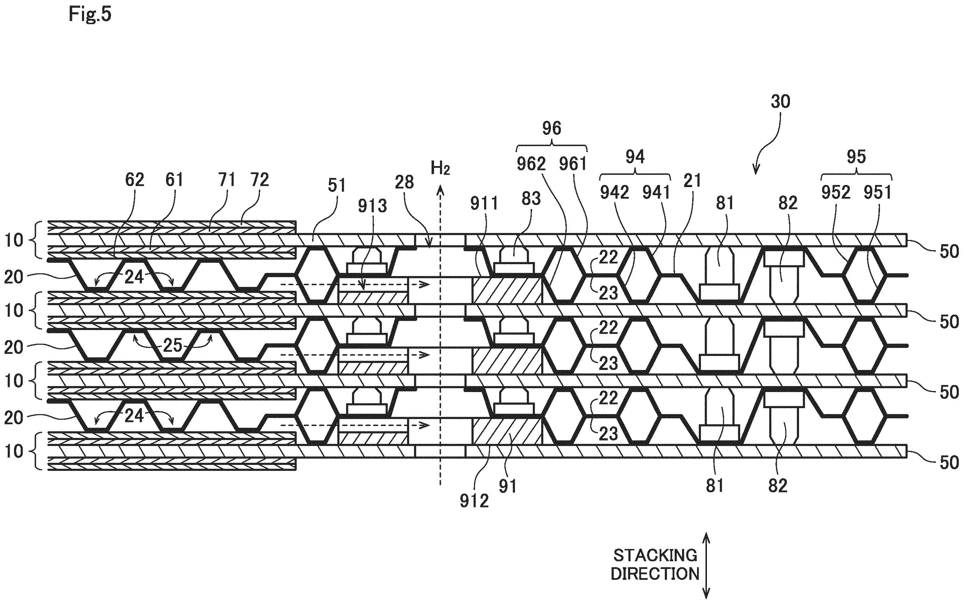

Fig. 3 shows the anode surface 22 of the separator 20. In Fig. 3, a region where the anode catalyst layer 61 and the anode gas diffusion layer 62 is arranged is indicated by a phantom line (a line with alternate long and short dashes). Fig. 4 shows the cathode surface 23 of the separator 20. In Fig. 4, a region where the cathode catalyst layer 71 and the cathode gas diffusion layer 72 is arranged is indicated by a phantom line (a line with alternate long and short dashes). Fig. 5 is a sectional view of the stack structure 30 taken at a position A-A in Fig. 4.

As shown in Fig. 5, the cells 10 and the separators 20 are stacked alternately in the stacking direction. The cell 10 includes a base layer 50 with the electrolyte membrane 51 described above, the anode catalyst layer 61, the anode gas diffusion layer 62, the cathode catalyst layer 71, and the cathode gas diffusion layer 72. In the illustration in Fig. 5, the base layer 50 is composed only of the electrolyte membrane 51. Alternatively, the base layer 50 may be composed of the electrolyte membrane 51 and a subgasket formed at a periphery of the electrolyte membrane 51.

The separator 20 includes the metal plate 21. As an example, the metal plate 21 is a titanium thin plate coated with platinum. Alternatively, the metal plate 21 may be made of stainless steel coated with gold, for example. The separator 20 of the present preferred embodiment is formed through presswork on a single metal plate. Employing the presswork makes it possible to form the separator 20 at lower cost than in a case of employing a different forming method such as etching.

The metal plate 21 includes the anode surface 22 shown in Fig. 3 and the cathode surface 23 shown in Fig. 4. As shown in Fig. 3, the metal plate 21 includes a plurality of the anode grooves 24 described above formed at the center and in the vicinity of the center of the anode surface 22. As shown in Fig. 4, the metal plate 21 includes a plurality of the cathode grooves 25 described above formed at the center and in the vicinity of the center of the cathode surface 23.

In the present preferred embodiment, as shown in Fig. 5, the metal plate 21 is processed into an undulated shape to provide the anode grooves 24 and the cathode grooves 25 in one metal plate 21. The anode grooves 24 and the cathode grooves 25 are arranged alternately along surfaces of the separator 20. Specifically, a part of the anode surface 22 having a projecting shape and defined between adjacent anode grooves 24 forms the cathode groove 25 of a recess shape at the cathode surface 23. Also, a part of the cathode surface 23 having a projecting shape and defined between adjacent cathode grooves 25 forms the anode groove 24 of a recess shape at the anode surface 22. By doing so, it becomes possible to provide a plurality of the anode grooves 24 and a plurality of the cathode grooves 25 on respective surfaces of the separator 20 using the single metal plate 21 without using a plurality of metal plates.

As shown in Figs. 3 and 4, the metal plate 21 includes a plurality of water distribution holes 26. The water distribution hole 26 is a distribution hole for distributing water to be supplied to the anode gas diffusion layer 62. When viewed in the stacking direction, the water distribution holes 26 are located external to the anode gas diffusion layer 62. The water distribution hole 26 penetrates the metal plate 21 in the stacking direction. The base layer 50 of the cell 10 includes a through hole formed at a position overlapping the water distribution hole 26 in the stacking direction. Thus, while the cells 10 and the separators 20 are stacked alternately, the water distribution holes 26 each form a continuous distribution path extending in the stacking direction.

As shown in Figs. 3 and 4, the metal plate 21 includes a plurality of oxygen distribution holes 27. The oxygen distribution hole 27 is a distribution hole for distributing oxygen output from the anode gas diffusion layer 62. The oxygen distribution holes 27 are also used for distributing water remaining unreacted. When viewed in the stacking direction, the oxygen distribution holes 27 are located external to the anode gas diffusion layer 62. The oxygen distribution hole 27 penetrates the metal plate 21 in the stacking direction. The base layer 50 of the cell 10 includes a through hole formed at a position overlapping the oxygen distribution hole 27 in the stacking direction. Thus, while the cells 10 and the separators 20 are stacked alternately, the oxygen distribution holes 27 each form a continuous distribution path extending in the stacking direction.

As shown in Figs. 3 to 5, the metal plate 21 includes a plurality of hydrogen distribution holes 28. The hydrogen distribution hole 28 is a distribution hole for distributing hydrogen output from the cathode gas diffusion layer 72. When viewed in the stacking direction, the hydrogen distribution holes 28 are located external to the cathode gas diffusion layer 72. The hydrogen distribution hole 28 penetrates the metal plate 21 in the stacking direction. The base layer 50 of the cell 10 includes a through hole formed at a position overlapping the hydrogen distribution hole 28 in the stacking direction. Thus, while the cells 10 and the separators 20 are stacked alternately, the hydrogen distribution holes 28 each form a continuous distribution path extending in the stacking direction.

As shown in Figs. 3 and 5, the separator 20 includes an anode outer peripheral seal member 81. The anode outer peripheral seal member 81 is a ring-like seal member (O-ring) attached to the anode surface 22 of the metal plate 21. The anode outer peripheral seal member 81 is made of an elastic material such as rubber. The anode outer peripheral seal member 81 is arranged along an outer peripheral part of the anode surface 22. The anode outer peripheral seal member 81 contacts an anode-side surface of the base layer 50. The anode outer peripheral seal member 81 is interposed in a state of being compressed in the stacking direction between the outer peripheral part of the anode surface 22 and an outer peripheral part of the base layer 50. As a result, water and oxygen existing between the base layer 50 and the anode surface 22 of the metal plate 21 become unlikely to leak to the outside of the anode outer peripheral seal member 81.

As shown in Figs. 4 and 5, the separator 20 includes a cathode outer peripheral seal member 82. The cathode outer peripheral seal member 82 is a ring-like seal member (O-ring) attached to the cathode surface 23 of the metal plate 21. The cathode outer peripheral seal member 82 is made of an elastic material such as rubber. The cathode outer peripheral seal member 82 is arranged along an outer peripheral part of the cathode surface 23. The cathode outer peripheral seal member 82 contacts a cathode-side surface of the base layer 50. The cathode outer peripheral seal member 82 is interposed in a state of being compressed in the stacking direction between the outer peripheral part of the cathode surface 23 and the outer peripheral part of the base layer 50. As a result, hydrogen existing between the base layer 50 and the cathode surface 23 of the metal plate 21 becomes unlikely to leak to the outside of the cathode outer peripheral seal member 82.

As shown in Figs. 3 and 5, the separator 20 includes a plurality of first seal members 83. The first seal member 83 is a ring-like seal member (O-ring) attached to the anode surface 22 of the metal plate 21. The first seal member 83 is made of an elastic material such as rubber. When viewed in the stacking direction, the first seal member 83 surrounds the hydrogen distribution hole 28. The first seal member 83 contacts the anode-side surface of the base layer 50. The first seal member 83 is provided around the hydrogen distribution hole 28 and interposed in a state of being compressed in the stacking direction between the anode surface 22 and the base layer 50. As a result, water and oxygen existing between the anode surface 22 and the base layer 50 become unlikely to flow into the hydrogen distribution hole 28. Hydrogen existing in the hydrogen distribution hole 28 also becomes unlikely to flow in between the anode surface 22 and the base layer 50.

The separator 20 includes a plurality of second seal members 84. As shown in Fig. 4, the second seal member 84 is a ring-like seal member (O-ring) attached to the cathode surface 23 of the metal plate 21. The second seal member 84 is made of an elastic material such as rubber. When viewed in the stacking direction, the second seal member 84 surrounds the water distribution hole 26. The second seal member 84 contacts the cathode-side surface of the base layer 50. The second seal member 84 is provided around the water distribution hole 26 and interposed in a state of being compressed in the stacking direction between the cathode surface 23 and the base layer 50. As a result, hydrogen existing between the cathode surface 23 and the base layer 50 becomes unlikely to flow into the water distribution hole 26. Water existing in the water distribution hole 26 also becomes unlikely to flow in between the cathode surface 23 and the base layer 50.

The separator 20 includes a plurality of third seal members 85. As shown in Fig. 4, the third seal member 85 is a ring-like seal member (O-ring) attached to the cathode surface 23 of the metal plate 21. The third seal member 85 is made of an elastic material such as rubber. When viewed in the stacking direction, the third seal member 85 surrounds the oxygen distribution hole 27. The third seal member 85 contacts the cathode-side surface of the base layer 50. The third seal member 85 is provided around the oxygen distribution hole 27 and interposed in a state of being compressed in the stacking direction between the cathode surface 23 and the base layer 50. As a result, hydrogen existing between the cathode surface 23 and the base layer 50 becomes unlikely to flow into the oxygen distribution hole 27. Oxygen existing in the oxygen distribution hole 27 also becomes unlikely to flow in between the cathode surface 23 and the base layer 50.

### <3. Flow Path Member>

### <3-1. Cathode Flow Path Member>

As shown in Figs. 4 and 5, the separator 20 of the present preferred embodiment includes a plurality of cathode flow path members 91. The cathode flow path member 91 is a member for forming a flow path for hydrogen around the hydrogen distribution hole 28. The cathode flow path member 91 is made of resin such as polystyrene (PS) or polyphenylene sulfide (PPS), for example. Alternatively, the cathode flow path member 91 may be a film made of resin such as polyethylene naphthalate (PEN) or polyethylene terephthalate (PET). Still alternatively, the cathode flow path member 91 may be a plate made of metal such as titanium or stainless steel.

As shown in Fig. 5, the cathode flow path member 91 includes a first surface 911 and a second surface 912. The first surface 911 is fixed to the cathode surface 23 of the metal plate 21 with an adhesive, for example. The second surface 912 contacts the cathode-side surface of the base layer 50. Specifically, the cathode flow path member 91 is interposed between the cathode surface 23 of the metal plate 21 and the cathode-side surface of the base layer 50 in the stacking direction. As shown in Fig. 4, when viewed in the stacking direction, the cathode flow path member 91 surrounds the hydrogen distribution hole 28.

The cathode flow path member 91 includes a plurality of hydrogen flow paths 913. In the present preferred embodiment, the hydrogen flow path 913 is a groove formed at the first surface 911 of the cathode flow path member 91. The groove forming the hydrogen flow path 913 penetrates the first surface 911 of the cathode flow path member 91 in a direction in which the cathode gas diffusion layer 72 and the hydrogen distribution hole 28 are connected to each other. In this way, the hydrogen flow path 913 functions as a flow path through which the cathode gas diffusion layer 72 and the hydrogen distribution hole 28 communicate with each other.

Hydrogen in a gaseous form output from the cathode gas diffusion layer 72 passes through the hydrogen flow paths 913 of the cathode flow path member 91 as indicated by arrows with dashes shown in Fig. 5 and then flows into the hydrogen distribution hole 28. In this way, in the configuration of the present preferred embodiment, the cathode flow path member 91 forms the flow path for hydrogen between the cathode gas diffusion layer 72 and the hydrogen distribution hole 28. By doing so, it becomes unnecessary to form a flow path using a combination of a plurality of metal plates. This achieves reduction in the number of metal plates to be used as the separator 20. As a result, manufacturing cost for the water electrolyzer 1 is reduced.

The above-described first seal member 83 is arranged on a surface of the metal plate 21 on the opposite side to the cathode flow path member 91. When viewed in the stacking direction, the cathode flow path member 91 is arranged at a position overlapping the first seal member 83. Thus, as shown in Fig. 5, the second surface 912 of the cathode flow path member 91 and the first seal member 83 of the adjacent separator 20 are next to each other across the base layer 50. In the present preferred embodiment, the second surface 912 of the cathode flow path member 91 is a flat surface. This causes the first seal member 83 to contact the base layer 50 more tightly. As a result, it becomes possible to further improve sealing performance achieved by the first seal member 83.

### <3-2. First Anode Flow Path Member>

As shown in Fig. 3, the separator 20 of the present preferred embodiment includes a first anode flow path member 92. The first anode flow path member 92 is a member for forming a flow path for water around the water distribution hole 26. The first anode flow path member 92 is made of resin such as polystyrene (PS) or polyphenylene sulfide (PPS), for example. Alternatively, the first anode flow path member 92 may be a film made of resin such as polyethylene naphthalate (PEN) or polyethylene terephthalate (PET). Still alternatively, the first anode flow path member 92 may be a plate made of metal such as titanium or stainless steel.

Like the cathode flow path member 91 described above, the first anode flow path member 92 includes a first surface and a second surface. The first surface is fixed to the anode surface 22 of the metal plate 21 with an adhesive, for example. The second surface contacts the anode-side surface of the base layer 50. Specifically, the first anode flow path member 92 is interposed between the anode surface 22 of the metal plate 21 and the anode-side surface of the base layer 50 in the stacking direction. As shown in Fig. 3, when viewed in the stacking direction, the first anode flow path member 92 surrounds the water distribution hole 26.

The first anode flow path member 92 includes a plurality of water flow paths 923. In the present preferred embodiment, the water flow path 923 is a groove formed at the first surface of the first anode flow path member 92. The groove forming the water flow path 923 penetrates the first surface of the first anode flow path member 92 in a direction in which the anode gas diffusion layer 62 and the water distribution hole 26 are connected to each other. In this way, the water flow path 923 functions as a flow path through which the anode gas diffusion layer 62 and the water distribution hole 26 communicate with each other.

Water in a liquid form supplied from outside to the water distribution hole 26 passes through the water flow paths 923 of the first anode flow path member 92 and then flows into the anode gas diffusion layer 62. In this way, in the configuration of the present preferred embodiment, the first anode flow path member 92 forms the flow path for water between the water distribution hole 26 and the anode gas diffusion layer 62. By doing so, it becomes unnecessary to form a flow path using a combination of a plurality of metal plates. This achieves reduction in the number of metal plates to be used as the separator 20. As a result, manufacturing cost for the water electrolyzer 1 is reduced.

The above-described second seal member 84 is arranged on a surface of the metal plate 21 on the opposite side to the first anode flow path member 92. When viewed in the stacking direction, the first anode flow path member 92 is arranged at a position overlapping the second seal member 84. Thus, the second surface of the first anode flow path member 92 and the second seal member 84 of the adjacent separator 20 are next to each other across the base layer 50. Furthermore, the second surface of the first anode flow path member 92 is a flat surface. This causes the second seal member 84 to contact the base layer 50 more tightly. As a result, it becomes possible to further improve sealing performance achieved by the second seal member 84.

### <3-3. Second Anode Flow Path Member>

As shown in Fig. 3, the separator 20 of the present preferred embodiment includes a second anode flow path member 93. The second anode flow path member 93 is a member for forming a flow path for oxygen around the oxygen distribution hole 27. The second anode flow path member 93 is made of resin such as polystyrene (PS) or polyphenylene sulfide (PPS), for example. Alternatively, the second anode flow path member 93 may be a film made of resin such as polyethylene naphthalate (PEN) or polyethylene terephthalate (PET). Still alternatively, the second anode flow path member 93 may be a plate made of metal such as titanium or stainless steel.

Like the cathode flow path member 91 described above, the second anode flow path member 93 includes a first surface and a second surface. The first surface is fixed to the anode surface 22 of the metal plate 21 with an adhesive, for example. The second surface contacts the anode-side surface of the base layer 50. Specifically, the second anode flow path member 93 is interposed between the anode surface 22 of the metal plate 21 and the anode-side surface of the base layer 50 in the stacking direction. As shown in Fig. 3, when viewed in the stacking direction, the second anode flow path member 93 surrounds the oxygen distribution hole 27.

The second anode flow path member 93 includes a plurality of oxygen flow paths 933. In the present preferred embodiment, the oxygen flow path 933 is a groove formed at the first surface of the second anode flow path member 93. The groove forming the oxygen flow path 933 penetrates the first surface of the second anode flow path member 93 in a direction in which the anode gas diffusion layer 62 and the oxygen distribution hole 27 are connected to each other. In this way, the oxygen flow path 933 functions as a flow path through which the anode gas diffusion layer 62 and the oxygen distribution hole 27 communicate with each other.

Oxygen in a gaseous form output from the anode gas diffusion layer 62 passes through the oxygen flow paths 933 of the second anode flow path member 93 and then flows into the oxygen distribution hole 27. In this way, in the configuration of the present preferred embodiment, the second anode flow path member 93 forms the flow path for oxygen between the anode gas diffusion layer 62 and the oxygen distribution hole 27. By doing so, it becomes unnecessary to form a flow path using a combination of a plurality of metal plates. This achieves reduction in the number of metal plates to be used as the separator 20. As a result, manufacturing cost for the water electrolyzer 1 is reduced.

The above-described third seal member 85 is arranged on a surface of the metal plate 21 on the opposite side to the second anode flow path member 93. When viewed in the stacking direction, the second anode flow path member 93 is arranged at a position overlapping the third seal member 85. Thus, the second surface of the second anode flow path member 93 and the third seal member 85 of the adjacent separator 20 are next to each other across the base layer 50. Furthermore, the second surface of the second anode flow path member 93 is a flat surface. This causes the third seal member 85 to contact the base layer 50 more tightly. As a result, it becomes possible to further improve sealing performance achieved by the third seal member 85.

### <3-4. Modification of Flow Path Member>

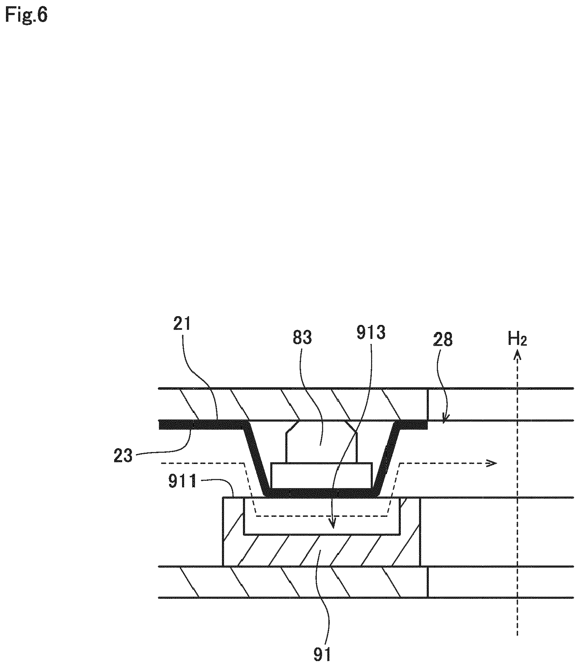

Fig. 6 shows a modification of the above-described cathode flow path member 91. In the illustration in Fig. 6, the hydrogen flow path 913 is also a groove formed at the first surface 911 of the cathode flow path member 91. In the illustration in Fig. 6, however, this groove does not penetrate the first surface 911 in a direction in which the cathode gas diffusion layer 72 and the hydrogen distribution hole 28 are connected to each other. In the illustration in Fig. 6, this groove is a recess formed at a part of the first surface 911 except both end portions thereof defined in the direction in which the cathode gas diffusion layer 72 and the hydrogen distribution hole 28 are connected to each other. The cathode surface 23 of the metal plate 21 has a bent shape conforming to this shape of the first surface 911. Thus, the foregoing both end portions of the cathode flow path member 91 are in non-contact with the metal plate 21. Even in this configuration, it is still possible to provide the hydrogen flow path 913 between the cathode flow path member 91 and the metal plate 21 and through which the cathode gas diffusion layer 72 and the hydrogen distribution hole 28 communicate with each other.

The first anode flow path member 92 and the second anode flow path member 93 may have their shapes corresponding to that of the cathode flow path member 91 shown in Fig. 6.

The cathode flow path member 91, the first anode flow path member 92, and the second anode flow path member 93 may be made of a porous material such as ceramic. In this case, fine holes of the porous material can be used to form a flow path through which a gas diffusion layer and a distribution hole communicate with each other. Thus, it is not necessary to form a groove as a flow path.

### <4. Regulator>

### <4-1. Anode Outer Peripheral Regulator>

As shown in Figs. 3 to 5, the metal plate 21 of the present preferred embodiment includes an anode outer peripheral regulator 94. The anode outer peripheral regulator 94 is a regulator for reducing a likelihood that the anode outer peripheral seal member 81 will be compressed excessively in the vicinity of an outer peripheral part of the separator 20.

The anode outer peripheral regulator 94 is located near the anode outer peripheral seal member 81. As shown in Figs. 3 and 4, the anode outer peripheral regulator 94 is provided in a ring-like shape along the anode outer peripheral seal member 81. The anode outer peripheral regulator 94 of the present preferred embodiment includes a plurality of projections 941 formed at the metal plate 21. The projections 941 are formed through presswork on the metal plate 21. The projection 941 of the anode outer peripheral regulator 94 projects toward the anode-side surface of the base layer 50. The projection 941 has a tip contacting the anode-side surface of the base layer 50. As a result, a likelihood is reduced that the anode outer peripheral seal member 81 will be compressed excessively in the stacking direction.

In particular, in the present preferred embodiment, the anode outer peripheral regulator 94 includes not only the above-described projections 941 but also a plurality of projections 942 projecting toward the opposite side of the stacking direction. As shown in Figs. 3 and 4, when viewed in the stacking direction, the projection 941 and the projection 942 are arranged alternately along the anode outer peripheral seal member 81. The projections 942 contact the cathode-side surface of the base layer 50. By doing so, it becomes possible for the anode outer peripheral regulator 94 to contact both the base layer 50 of the cell 10 arranged on one side relative to the separator 20 and the base layer 50 of the cell 10 arranged on the other side relative to the separator 20. This allows the anode outer peripheral regulator 94 to be positioned stably in the stacking direction. As a result, it becomes possible to further reduce a likelihood that the anode outer peripheral seal member 81 will be compressed excessively in the stacking direction.

As shown in Fig. 5, the respective tips of the projections 941 and 942 are flat surfaces. Each of these flat surfaces contacts the base layer 50. This makes it possible to reduce pressure per unit area to be applied on the base layer 50, compared to a case where each of the respective tips of the projections 941 and 942 makes point contact with the base layer 50. In this way, damage on the base layer 50 is reduced.

### <4-2. Cathode Outer Peripheral Regulator>

As shown in Figs. 3 to 5, the metal plate 21 of the present preferred embodiment includes a cathode outer peripheral regulator 95. The cathode outer peripheral regulator 95 is a regulator for reducing a likelihood that the cathode outer peripheral seal member 82 will be compressed excessively in the vicinity of the outer peripheral part of the separator 20.

The cathode outer peripheral regulator 95 is located near the cathode outer peripheral seal member 82. As shown in Figs. 3 and 4, the cathode outer peripheral regulator 95 is provided in a ring-like shape along the cathode outer peripheral seal member 82. The cathode outer peripheral regulator 95 of the present preferred embodiment includes a plurality of projections 951 formed at the metal plate 21. The projections 951 are formed through presswork on the metal plate 21. The projection 951 of the cathode outer peripheral regulator 95 projects toward the cathode-side surface of the base layer 50. The projection 951 has a tip contacting the cathode-side surface of the base layer 50. As a result, a likelihood is reduced that the cathode outer peripheral seal member 82 will be compressed excessively in the stacking direction.

In particular, in the present preferred embodiment, the cathode outer peripheral regulator 95 includes not only the above-described projections 951 but also a plurality of projections 952 projecting toward the opposite side of the stacking direction. As shown in Figs. 3 and 4, when viewed in the stacking direction, the projection 951 and the projection 952 are arranged alternately along the cathode outer peripheral seal member 82. The projections 952 contact the anode-side surface of the base layer 50. By doing so, it becomes possible for the cathode outer peripheral regulator 95 to contact both the base layer 50 of the cell 10 arranged on one side relative to the separator 20 and the base layer 50 of the cell 10 arranged on the other side relative to the separator 20. This allows the cathode outer peripheral regulator 95 to be positioned stably in the stacking direction. As a result, it becomes possible to further reduce a likelihood that the cathode outer peripheral seal member 82 will be compressed excessively in the stacking direction.

As shown in Fig. 5, the respective tips of the projections 951 and 952 are flat surfaces. Each of these flat surfaces contacts the base layer 50. This makes it possible to reduce pressure per unit area to be applied on the base layer 50, compared to a case where each of the respective tips of the projections 951 and 952 makes point contact with the base layer 50. In this way, damage on the base layer 50 is reduced.

### <4-3. First Regulator>

As shown in Figs. 3 to 5, the metal plate 21 of the present preferred embodiment includes a first regulator 96. The first regulator 96 is a regulator for reducing a likelihood that the first seal member 83 will be compressed excessively around the hydrogen distribution hole 28.

The first regulator 96 is located near the first seal member 83. As shown in Figs. 3 and 4, the first regulator 96 is provided in a ring-like shape along the first seal member 83. The first regulator 96 of the present preferred embodiment includes a plurality of projections 961 formed at the metal plate 21. The projections 961 are formed through presswork on the metal plate 21. The projection 961 of the first regulator 96 projects toward the anode-side surface of the base layer 50. The projection 961 has a tip contacting the anode-side surface of the base layer 50. As a result, a likelihood is reduced that the first seal member 83 will be compressed excessively in the stacking direction.

In particular, in the present preferred embodiment, the first regulator 96 includes not only the above-described projections 961 but also a plurality of projections 962 projecting toward the opposite side of the stacking direction. When viewed in the stacking direction, the projection 961 and the projection 962 are arranged alternately along the first seal member 83. The projections 962 contact the cathode-side surface of the base layer 50. By doing so, it becomes possible for the first regulator 96 to contact both the base layer 50 of the cell 10 arranged on one side relative to the separator 20 and the base layer 50 of the cell 10 arranged on the other side relative to the separator 20. This allows the first regulator 96 to be positioned stably in the stacking direction. As a result, it becomes possible to further reduce a likelihood that the first seal member 83 will be compressed excessively in the stacking direction.

As shown in Fig. 5, the respective tips of the projections 961 and 962 are flat surfaces. Each of these flat surfaces contacts the base layer 50. This makes it possible to reduce pressure per unit area to be applied on the base layer 50, compared to a case where each of the respective tips of the projections 961 and 962 makes point contact with the base layer 50. In this way, damage on the base layer 50 is reduced.

### <4-4. Second Regulator>

As shown in Figs. 3 and 4, the metal plate 21 of the present preferred embodiment includes a second regulator 97. The second regulator 97 is a regulator for reducing a likelihood that the second seal member 84 will be compressed excessively around the water distribution hole 26.

The second regulator 97 is located near the second seal member 84. As shown in Figs. 3 and 4, the second regulator 97 is provided in a ring-like shape along the second seal member 84. The second regulator 97 of the present preferred embodiment includes a plurality of projections 971 formed at the metal plate 21. The projections 971 are formed through presswork on the metal plate 21. The projection 971 of the second regulator 97 projects toward the cathode-side surface of the base layer 50. The projection 971 has a tip contacting the cathode-side surface of the base layer 50. As a result, a likelihood is reduced that the second seal member 84 will be compressed excessively in the stacking direction.

In particular, in the present preferred embodiment, the second regulator 97 includes not only the above-described projections 971 but also a plurality of projections 972 projecting toward the opposite side of the stacking direction. When viewed in the stacking direction, the projection 971 and the projection 972 are arranged alternately along the second seal member 84. The projections 972 contact the anode-side surface of the base layer 50. By doing so, it becomes possible for the second regulator 97 to contact both the base layer 50 of the cell 10 arranged on one side relative to the separator 20 and the base layer 50 of the cell 10 arranged on the other side relative to the separator 20. This allows the second regulator 97 to be positioned stably in the stacking direction. As a result, it becomes possible to further reduce a likelihood that the second seal member 84 will be compressed excessively in the stacking direction.

### <4-5. Third Regulator>

As shown in Figs. 3 and 4, the metal plate 21 of the present preferred embodiment includes a third regulator 98. The third regulator 98 is a regulator for reducing a likelihood that the third seal member 85 will be compressed excessively around the oxygen distribution hole 27.

The third regulator 98 is located near the third seal member 85. As shown in Figs. 3 and 4, the third regulator 98 is provided in a ring-like shape along the third seal member 85. The third regulator 98 of the present preferred embodiment includes a plurality of projections 981 formed at the metal plate 21. The projections 981 are formed through presswork on the metal plate 21. The projection 981 of the third regulator 98 projects toward the cathode-side surface of the base layer 50. The projection 981 has a tip contacting the cathode-side surface of the base layer 50. As a result, a likelihood is reduced that the third seal member 85 will be compressed excessively in the stacking direction.

In particular, in the present preferred embodiment, the third regulator 98 includes not only the above-described projections 981 but also a plurality of projections 982 projecting toward the opposite side of the stacking direction. When viewed in the stacking direction, the projection 981 and the projection 982 are arranged alternately along the third seal member 85. The projections 982 contact the anode-side surface of the base layer 50. By doing so, it becomes possible for the third regulator 98 to contact both the base layer 50 of the cell 10 arranged on one side relative to the separator 20 and the base layer 50 of the cell 10 arranged on the other side relative to the separator 20. This allows the third regulator 98 to be positioned stably in the stacking direction. As a result, it becomes possible to further reduce a likelihood that the third seal member 85 will be compressed excessively in the stacking direction.

### <4-6. Modification of Regulator>

In the above-described preferred embodiment, the metal plate 21 includes the anode outer peripheral regulator 94, the cathode outer peripheral regulator 95, the first regulator 96, the second regulator 97, and the third regulator 98. Alternatively, the metal plate 21 may include only some of these regulators. As an example, the metal plate 21 may include only the anode outer peripheral regulator 94 and the cathode outer peripheral regulator 95 of these regulators. By controlling an interval between the base layers 50 adjacent to each other at the outer peripheral part of the separator 20, it becomes possible to impose restriction to some degree on the amount of compression of each the first seal member 83, the second seal member 84, and the third seal member 85 internal to the outer peripheral part.

## Claims

1. A water electrolyzer (1) comprising:
a plurality of cells (10); and
a plurality of separators (20),
the water electrolyzer having a stack structure (30) with said cells (10) and said separators (20) stacked alternately,
each of said cells (10) including:
a base layer (50) including an electrolyte membrane (51);
a catalyst layer layered on a surface of said electrolyte membrane (51); and
a gas diffusion layer layered on a surface of said catalyst layer,
each of said separators (20) including:
a metal plate (21) with a distribution hole; and
a ring-like flow path member located between said base layer (50) and said metal plate (21) in a stacking direction and surrounding said distribution hole when viewed in said stacking direction,
said flow path member including a flow path through which said gas diffusion layer and said distribution hole communicate with each other.

2. The water electrolyzer (1) according to claim 1, wherein
each of said cells (10) includes:
a cathode catalyst layer (71) that is said catalyst layer layered on said electrolyte membrane (51) on one side; and
a cathode gas diffusion layer (72) that is said gas diffusion layer layered on said cathode catalyst layer (71) on the one side,
said metal plate (21) includes a hydrogen distribution hole (28) that is said distribution hole for distributing hydrogen output from said cathode gas diffusion layer (72),
each of said separators (20) includes a cathode flow path member (91) that is said flow path member located between a cathode-side surface of said base layer (50) and said metal plate (21) in said stacking direction and surrounding said hydrogen distribution hole (28) when viewed in said stacking direction, and
said cathode flow path member (91) includes a hydrogen flow path (913) that is said flow path through which said cathode gas diffusion layer (72) and said hydrogen distribution hole (28) communicate with each other.

3. The water electrolyzer (1) according to claim 1 or 2, wherein
each of said cells (10) includes:
an anode catalyst layer (61) that is said catalyst layer layered on said electrolyte membrane (51) on the other side; and
an anode gas diffusion layer (62) that is said gas diffusion layer layered on said anode catalyst layer (61) on the other side,
said metal plate (21) includes:
a water distribution hole (26) that is said distribution hole for distributing water to be supplied to said anode gas diffusion layer (62); and
an oxygen distribution hole (27) that is said distribution hole for distributing oxygen output from said anode gas diffusion layer (62),
each of said separators (20) includes:
a first anode flow path member (92) that is said flow path member located between an anode-side surface of said base layer (50) and said metal plate (21) in said stacking direction and surrounding said water distribution hole (26) when viewed in said stacking direction; and
a second anode flow path member (93) that is said flow path member located between said anode-side surface of said base layer (50) and said metal plate (21) in said stacking direction and surrounding said oxygen distribution hole (27) when viewed in said stacking direction,
said first anode flow path member (92) includes a water flow path (923) that is said flow path through which said anode gas diffusion layer (62) and said water distribution hole (26) communicate with each other, and
said second anode flow path member (93) includes an oxygen flow path (933) that is said flow path through which said anode gas diffusion layer (62) and said oxygen distribution hole (27) communicate with each other.

4. The water electrolyzer (1) according to any one of claims 1 to 3, wherein said flow path member includes:
a first surface contacting said metal plate (21); and
a second surface contacting said base layer (50), and
said flow path is a groove formed at said first surface.

5. The water electrolyzer (1) according to claim 4, wherein
each of said separators (20) further includes a ring-like seal member arranged on a surface of said metal plate (21) on the opposite side to said flow path member and surrounding said distribution hole when viewed in said stacking direction,
when viewed in said stacking direction, said flow path member is arranged at a position overlapping said seal member, and
said second surface of said flow path member is a flat surface.

6. The water electrolyzer (1) according to claim 4 or 5, wherein
said groove penetrates said first surface of said flow path member in a direction in which said gas diffusion layer and said distribution hole are connected to each other.

7. The water electrolyzer (1) according to claim 4 or 5, wherein
said groove is a recess formed at a part of said first surface except both end portions thereof defined in a direction in which said gas diffusion layer and said distribution hole are connected to each other, and
said both end portions of said flow path member are in non-contact with said metal plate (21).
